# DEMANDE DE BREVET EUROPEEN

(11) **EP 1 095 905 A1**
(43) Date de publication de la demande: **02.05.2001**
(21) Numéro de dépôt: 00402825.4
(22) Date de dépôt: 12.10.2000
(51) Int. Cl.: C01B 15/013, B01J 47/06, B01J 47/02

(54) **Procédé de purification de solutions aqueuses de peroxyde d'hydrogène**

(30) Priorité: 27.10.1999 FR 9913435
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR); Air Liquide Electronics Systems, 75007 Paris (FR)
(72) Inventeur: Devos, Christine, 75321 Paris cedex 07 (FR); Demay, Didier, 75321 Paris cedex 07 (FR); Dulphy, Hervé, 75321 Paris cedex 07 (FR)
(74) Mandataire: Vesin, Jacques

(57) **Abrégé**

Procédé de purification sur le site d'une solution aqueuse de peroxyde d'hydrogène dans lequel on fait traverser à la solution un lit de résine (71) susceptible, au moins partiellement, d'adsorber ou d'absorber les impuretés présentes dans la solution. La solution de peroxyde d'hydrogène (11) est injectée dans le lit de résine et traverse celui-ci à une vitesse sensiblement linéaire comprise de préférence entre 10m/h et 50m/h et de préférence entre 10m/h et 20m/h tandis que le lit de résine est maintenu sensiblement tassé pendant au moins 50% de la durée de la purification de la solution par passage au contact de ladite résine

## Description

L'invention concerne un procédé pour la purification de solutions aqueuse de peroxyde d'hydrogène à l'aide de résines échangeuses d'ions. Plus particulièrement, l'invention se rapporte à un procédé, pour l'obtention de solutions aqueuses de peroxyde d'hydrogène contenant de très faibles teneurs en impuretés et notamment en impuretés métalliques et destinées à la fabrication des semi-conducteurs, ce procédé d'obtention étant mis en oeuvre très près ou au point d'utilisation de la solution aqueuse.

L'invention concerne aussi une installation pour l'obtention de solutions aqueuses de peroxyde d'hydrogène contenant de très faibles quantités d'impuretés.

L'augmentation de la capacité des mémoires réalisées sous forme de circuits intégrés va de pair avec un accroissement de la pureté des produits chimiques utilisés pour la fabrication des puces sur lesquelles sont réalisés ces circuits intégrés.

Entre 1985 et 1990, la capacité des mémoires sur une puce était comprise entre 1Mbits et 16Mbits pour une épaisseur de trait de gravure comprise entre 1,5µm et 0,8µm, et nécessitait des solutions de peroxyde d'hydrogène dont chaque impureté devait être en concentration inférieure à 100 ppb.

Aujourd'hui, réaliser une mémoire de 64Mbits sur une puce de même taille nécessite une finesse de trait d'environ 0,35µm et utilise en général une qualité de peroxyde d'hydrogène avec un degré maximal d'impuretés pour chacune d'entre elles dans la gamme de 0,1 à 1 ppb.

Les fabricants de semi-conducteurs espèrent prochainement pouvoir commercialiser des mémoires de 256 Mbits et de 1 gigabit avec une géométrie minimum de gravure inférieure à 0,18µm. L'augmentation de la capacité des mémoires exigera alors un produit dont la quantité de chaque impureté sera inférieure à 50 ppt.

Le peroxyde d'hydrogène est généralement fabriqué par auto-oxydation d'un dérivé de l'anthraquinone ou d'un mélange de tels dérivés. Le(s) dit(s) dérivé(s) de l'anthraquinone intervien(nen)t dissous dans un mélange complexe de solvants organiques, tels qu'un hydrocarbure aromatique mélangé à un ester ou un alcool. Cette solution constitue la solution de travail. Cette solution de travail est tout d'abord hydrogénée en présence d'un catalyseur, ce qui provoque la conversion des quinones en hydroquinones. Elle est ensuite oxydée par mise en contact avec de l'air ou de l'air enrichi en oxygène. Lors de cette oxydation, les hydroquinones sont oxydées, à nouveau, en quinones, avec formation simultanée de peroxyde d'hydrogène. Ledit peroxyde d'hydrogène est extrait à l'eau et la solution de travail subit un traitement de régénération avant d'être à nouveau utilisée.

La solution aqueuse de peroxyde d'hydrogène brute est généralement concentrée par rectification et purifiée dans des colonnes de distillation en aluminium ou en acier inoxydable.

Après cette étape, la solution aqueuse de peroxyde d'hydrogène contient encore des impuretés telles que des matières organiques provenant des dérivés d'anthraquinone, des solvants ainsi que des dégradés de ces composés, et des éléments métalliques comme l'aluminium, le fer, le chrome, le zinc provenant de la surface des matériaux et tuyauteries utilisés. Cette solution de peroxyde d'hydrogène doit donc être soumise à un traitement ultérieur pour atteindre le degré de pureté exigé par l'industrie des semi-conducteurs.

Pour la purification d'une telle solution, on peut utiliser diverses techniques telles que la distillation, la cristallisation, le passage sur des lits de résines adsorbantes et/ou échangeuses d'ions, l'osmose inverse, la filtration, l'ultrafiltration...

En général, les matières organiques sont bien épurées par un procédé de distillation et/ou mettant en jeu une résine adsorbante. Pour plus de détails sur ces procédés, on pourra se reporter aux brevets FR-A- 2710045, EP-A- 835842, EP-A- 502466 et/ou FR-A-1539843. Les éléments métalliques, en quantité non négligeable pour l'application en microélectronique, ainsi que les anions tels que nitrates ou sulfates par exemple, sont généralement enlevés par passages sur des lits de résines échangeuses d'ions.

Différentes méthodes de purification des solutions aqueuses de peroxyde d'hydrogène avec des résines échangeuses d'ions ont été proposées dans la littérature. En général, ces méthodes comprennent le passage au contact d'au moins une résine échangeuse de cations fortement acide, obtenue par polymérisation de styrène et réticulation par le divinylbenzène suivi d'un traitement à l'acide sulfurique ainsi qu'au moins une résine échangeuse d'anions fortement basique obtenu par réaction d'un amine tertiaire, la trimethylamine par exemple, avec du polystyrène chlorométhylé.

En général, l'homme de métier sait que la forme hydroxyde de la résine anionique est à proscrire, car à son contact le peroxyde d'hydrogène se décompose très rapidement. Les formes carbonate CO₃²⁻ et bicarbonate HCO₃⁻, de basicité plus faible , peuvent être utilisées et sont décrites par exemple dans US-A-3294488, US-A-3305314 et/ou US-A-3297404.

Cependant, la réaction de décomposition du peroxyde d'hydrogène, au contact de ce support légèrement basique est toujours possible, particulièrement dans le cas où le peroxyde d'hydrogène reste en contact statique avec la résine pendant plusieurs dizaines de minutes à température ambiante.

Il est connu par l'homme de métier que cette réaction de décomposition du peroxyde d'hydrogène est accélérée par certains métaux tels que le fer et le chrome, qui peuvent être contenus dans la résine elle-même et proviennent des matériaux utilisés pendant sa synthèse. Dans ce but, il a été mis au point des modes particuliers de préparation des résines avant leur utilisation. Ainsi, il est décrit dans JP-A-08337405 un procédé de traitement des résines anionique et cationique avant utilisation par une solution aqueuse ultra pure d'un acide minéral (HCI par exemple). Après ce traitement acide, les résines sont rincées à l'eau ultra pure. La résine anionique est ensuite traitée par une solution aqueuse de soude puis par une solution de bicarbonate ou de carbonate de sodium avant d'être rincée à l'eau ultra pure. Ces traitements sont en général longs et un soin particulier doit être apporté pendant leur exécution afin d'éviter toute contamination.

Il est également connu que la décomposition du peroxyde d'hydrogène peut augmenter au fur et à mesure de l'épuration dudit peroxyde par l'accroissement de métaux captés par la résine et apportés par la solution de peroxyde d'hydrogène elle-même. L'ajout d'un acide minéral HX à la solution de peroxyde d'hydrogène avant mise en contact avec la résine anionique tel que décrit dans US-A-5200166 ou avec la résine cationique tel que décrit dans US-A-5534238 permet de diminuer le dégagement d'oxygène dû à la décomposition du peroxyde d'hydrogène.

Ces méthodes présentent l'inconvénient de diminuer considérablement le volume de peroxyde d'hydrogène pouvant être épuré par litre de résine. Par exemple, dans le cas de la résine anionique, des sites sont occupés par X, X étant ajouté en quantité non négligeable par rapport aux impuretés minérales anioniques contenues dans le peroxyde d'hydrogène. Ce point est particulièrement important dans le cas d'installations industrielles destinées à produire du peroxyde d'hydrogène. En effet, pour un même volume de peroxyde d'hydrogène, la quantité de résine nécessaire à l'épuration sera plus importante dans le cas où un acide HX est ajouté au peroxyde d'hydrogène.

Il est connu de EP-A-846 654 un procédé et dispositif de purification de solutions aqueuses de peroxyde d'hydrogène dans lequel la solution non purifiée ou partiellement purifiée s'écoule par gravité au travers de résines anioniques et cationiques. Du fait des pertes de charge dues aux résines, le débit de fonctionnement est limité du fait que l'écoulement est seulement créé par gravité, ce qui réduit considérablement la capacité de production. Dans cette réalisation, la résine cationique utilisée est prétraitée avec un acide afin d'éliminer les traces de métaux.

En outre, le dispositif décrit ne bénéficie pas d'un système de sécurité permettant d'arrêter rapidement l'unité au cas où la température dans celle-ci s'élève brusquement entraînant un risque d'explosion qui doit toujours être maîtrisé dans les unités de traitement de peroxyde d'hydrogène.

Ainsi, le problème de la génération sur le site de peroxyde d'hydrogène extrêmement pur reste à l'heure actuelle posé, même lorsqu'on utilise du peroxyde d'hydrogène pré-purifié.

La présente invention a pour objet un procédé de purification supplémentaire d'une solution de peroxyde d'hydrogène notamment de peroxyde d'hydrogène pré-purifié, qui ne présente pas les désavantages de l'état de la technique et grâce auquel il est possible, de manière non dangereuse, de préparer un peroxyde d'hydrogène de qualité ultra pure destiné à l'industrie des semi-conducteurs. Selon une variante préférentielle de l'invention, la solution de peroxyde d'hydrogène est pré-purifiée par distillation.

L'invention concerne plus particulièrement un procédé de purification sur le site d'une solution aqueuse de peroxyde d'hydrogène dans lequel on fait traverser à la solution un lit de résine susceptible, au moins partiellement, d'adsorber ou d'absorber les impuretés présentes dans la solution, procédé caractérisé en ce que la solution de peroxyde d'hydrogène est injectée dans le lit de résine et traverse celui-ci à une vitesse sensiblement linéaire comprise de préférence entre 10 m/h et 50 m/h et plus préférentiellement entre 10 m/h et 20 m/h et en ce que le lit de résine est maintenu sensiblement tassé, de préférence pendant au moins 50% de la durée de la purification de la solution par passage au contact de ladite résine.

Selon l'invention, on dispose de préférence au moins deux colonnes montées en série et contenant chacune une résine échangeuse d'ions ou une résine adsorbante (il est possible d'avoir une seule colonne, notamment si celle-ci contient des lits successifs de résines anioniques et/ou cationiques). De préférence, on utilisera des résines cationiques fortement acides, obtenues par sulfonation d'un copolymère de styrène et de divinylbenzène. De préférence également, on utilisera des résines anioniques de type 1, obtenues par amination d'un copolymère chlorométhylé de styrène et de divinylbenzène et dont la forme ionique est la forme carbonate ou bicarbonate. De manière avantageuse, ces résines sont particulièrement résistantes à l'oxydation.

Les résines échangeuses d'ions utilisées seront de préférence constituées de billes dont la caractéristique est de posséder un diamètre sensiblement uniforme, ce qui se traduit par un coefficient d'uniformité proche de 1, le diamètre desdites billes étant de préférence inférieur ou égal à 700 µm. La granulomètrie des billes de résines selon ce mode préférentiel de réalisation de l'invention permet des vitesses de réaction d'échange plus élevées qu'avec des résines traditionnelles et donc, l'obtention de solutions de peroxyde d'hydrogène de très haute pureté.

Selon un autre aspect de l'invention, on utilisera des résines comportant moins de 50mg de fer et/ou moins de 10mg de cuivre, et/ou moins de 50mg d'aluminium par litre de résine sèche : on a en effet constaté que ces résines de faible diamètre et ayant de faibles concentrations en éléments métalliques telles que décrites ci-dessus permettaient d'obtenir un peroxyde d'hydrogène particulièrement pur. Notamment on peut ainsi supprimer le prétraitement acide nécessaire avec les résines de l'art antérieur avant introduction dans la colonne de purification.

Selon un mode préférentiel de réalisation de l'invention, on utilise une résine anionique et/ou une résine cationique, disposées dans des lits placés séquentiellement dans une même colonne ou des colonnes séparées.

La résine anionique sera préférentiellement placée dans la première colonne (purification anionique d'abord), la résine cationique étant éventuellement placée dans la seconde colonne).

De préférence, le flux de liquide sera ascendant dans les colonnes et particulièrement dans la colonne qui contient la résine anionique afin de favoriser l'élimination des gaz comme par exemple le gaz carbonique qui provient de l'échange des anions dissous dans le peroxyde d'hydrogène avec les ions bicarbonates ou carbonates de la résine.

De manière avantageuse, le dispositif selon l'invention comprend un système de répartition du liquide en bas de chacune des colonnes (du type entonnoir, par exemple) afin de permettre une distribution équivalente du liquide sur la section de la colonne. La formation de passages préférentiels dans la colonne, qui diminuent l'efficacité de l'épuration, est ainsi évitée.

De manière avantageuse, le dispositif selon l'invention comprend un dispositif qui permet de bloquer les billes de résine dans chacune des colonnes, de façon à ce que le lit de résine ne soit pas soulevé par le flux de liquide ascendant. Ce dispositif peut permettre en outre de maintenir la résine tassée dans la colonne en exerçant une légère pression sur le lit.

De plus, ce dispositif constitue un organe de sécurité. En effet, en cas de surpression dans la colonne, le dispositif est repoussé vers l'extérieur de la colonne, permettant une expansion du lit de résine et une libération plus rapide des gaz tel que l'oxygène formé par la décomposition du peroxyde d'hydrogène. Ainsi lorsque ce dispositif est du type d'un couvercle coulissant dans la colonne, comme décrit sur les figures ci-après, ce couvercle coulissant a la double fonction de maintenir une pression sur la résine afin de la maintenir tassée, selon l'invention, et d'autre part, de pouvoir coulisser vers le haut et être éjecté de la colonne, en cas de surpression dans celle-ci venant de la décomposition du peroxyde d'hydrogène, assurant ainsi une fonction de sécurité.

Selon un aspect préférentiel de l'invention, on a constaté que l'on obtenait une excellente purification du peroxyde d'hydrogène, si, d'une part, la vitesse du liquide traversant le lit de résine (de préférence de façon ascendante) était sensiblement linéaire (c'est à dire que le vecteur vitesse comportait essentiellement une composante verticale, de module sensiblement constant, aux pertes de charge prêt) et d'autre part, que le lit de résines traversé par le peroxyde d'hydrogène était maintenu sensiblement tassé sur une partie significative de l'un au moins des lits de résine utilisés. Sensiblement tassé, signifie qu'une force additionnelle ayant une composante verticale s'exerce sur chaque bille, outre la force résultant du poids des autres billes se trouvant au dessus de cette bille. Cette force additionnelle pourra de préférence s'appliquer pendant sensiblement toute la durée de mise en oeuvre du procédé d'épuration.

Selon une autre caractéristique préférentielle, le liquide et/ou le gaz dans les colonnes est à une pression voisine de la pression atmosphérique. Ceci est particulièrement important pour la sécurité du dispositif en cas de décomposition du peroxyde d'hydrogène ; seuls les grains de résine, au moins partiellement, subissent une pression supérieure à la pression atmosphérique (lit au moins partiellement tassé) tandis que le liquide et/ou les gaz sont maintenus à la pression atmosphérique.

Pour assurer un bon fonctionnement de l'épuration du peroxyde d'hydrogène en solution, le lit de résine sera maintenu sensiblement tassé, pendant au moins 50% de la durée de purification de la solution par passage au contact de ladite résine. En effet, lorsque les grains de résine se séparent les uns des autres (ce qui engendrerait un lit de résine fluidisé ou partiellement fluidisé) l'efficacité de la purification diminue fortement, notamment dès lors que moins de 50% environ de la purification a lieu au contact d'une résine tassée, c'est à dire une résine dont moins de 50% environ des grains sont au contact les uns des autres. (moins de 50% de la purification ayant lieu au contact de résines tassées peut également signifier, selon l'invention, un lit de résine dont en moyenne, sur toute la hauteur du lit, moins de 50% des grains sont au contact les uns des autres, mais également une succession de lits dont le premier lit, par exemple, serait sous forme fluidisée et dont le second, par exemple, serait sous forme tassée, ou vice-versa (d'une manière générale, on pourra considérer que lorsqu'une partie au moins des grains de résine sont sensiblement au contact d'au moins un autre grain, alors la résine est sensiblement tassée).

De préférence, le lit de résine est maintenu sensiblement tassé par application d'une pression sur les grains ou billes de résine constituant le lit lorsque la solution est injectée dans ledit lit de bas en haut pour le traverser au moins partiellement.

La résine est selon un mode préférentiel, stockée dans une colonne et forme un lit de hauteur h au dessus duquel est disposée une surface sensiblement plane, à une distance d de la résine, le rapport d/h étant maintenu en toutes circonstances inférieur à environ 0,1., de préférence <0,05 et plus préférentiellement < 0,01.

De préférence, on appliquera sur au moins une partie du lit de résine (anionique et/ou cationique) une pression relative d'au moins 100 Pascal, de préférence d'au moins 200 Pascal.

Le lit de résine sera de préférence constitué de monosphères de diamètres sensiblement identique à 10% près.

Selon une variante de l'invention dans laquelle la résine est disposée sous forme d'un lit dans une colonne, la solution est injectée à la base de ladite colonne à l'aide d'une buse d'injection qui injecte le liquide dans un angle solide qui se raccorde sensiblement aux parois de la colonne de manière à injecter la solution sensiblement sur toute la section du lit de résine.

De préférence, la solution est injectée dans le lit de résine par la partie inférieure de celui-ci à l'aide d'un système de pompage. Il est également possible de prévoir plusieurs lits successifs de résines anioniques et/ou cationiques.

Selon un variante, le dispositif selon l'invention, comporte plusieurs colonnes successives d'épuration de la solution, ayant chacune au moins un lit de résine anionique et/ou cationiques, lesdits lits étant disposés sensiblement à la même hauteur.

De préférence, on prévoit des pièges à bulles entre les pompes et l'injection de liquide dans la colonne de purification.

Selon une variante de l'invention, pour assurer une meilleure sécurité, on mesure la température du liquide dans au moins un lit de résine de manière à détecter une augmentation anormale de température qui déclenche l'ouverture d'un circuit d'eau qui vient noyer le lit de résine. Dans un cas, l'eau est en général injectée à la base du lit de résine et remonte dans celui-ci.

Selon une autre variante de l'invention, on injecte de l'azote au dessus du lit de résine. En général, l'azote injecté aura de préférence une pureté dite « électronique » adaptée à la pureté gazeuse requise dans la fabrication des semi-conducteurs, notamment ceux qui vont être fabriqués ultérieurement à l'aide de la solution liquide. L'injection d'azote sera de préférence réalisée dans l'ensemble des colonnes et des réservoirs tampons afin d'éviter le contact entre l'air ambiant et le liquide.

Le liquide s'écoule de préférence de chaque colonne par débordement dans un réservoir. Le liquide est ensuite pompé de ce réservoir vers la colonne suivante. Quand le réservoir est placé après la dernière colonne du dispositif, le liquide peut être pompé vers les rejets ou vers une cuve de stockage ou en tête de la première colonne du dispositif afin de circuler en boucle. De manière avantageuse, la solution de peroxyde d'hydrogène circule en boucle pour permettre l'alimentation de la cuve de stockage de la solution de peroxyde d'hydrogène à purifier ou pour permettre la vidange de la cuve de stockage de la solution de peroxyde d'hydrogène purifiée. De cette façon, il est possible d'éviter des arrêts de l'unité et donc une perte de la capacité de production.

Un système de régulation permet l'obtention d'un débit constant dans tout le système. La charge volumique est comprise entre 4h⁻¹ et 40h⁻¹ et plus préférentiellement entre 10 et 20h⁻¹.

Le procédé est caractérisé en ce qu'il fonctionne de préférence en continu. Lorsque le système doit être arrêté, par exemple pour que l'opérateur effectue des opérations de maintenance, il est préalablement rincé avec de l'eau ultra pure. La résistivité de l'eau utilisée sera de préférence supérieure ou égale à 18MΩ.cm à 25°C.

De préférence, afin d'éviter tout risque de décomposition du peroxyde d'hydrogène au contact des résines, le procédé de l'invention est mis en oeuvre à une température comprise entre 0 et 25°C de préférence entre 0 et 15°C et, encore plus préférentiellement, à une température sensiblement égale à environ 5°C.

Afin d'éviter des problèmes de dégradation des résines, les solutions aqueuses traitées sont rarement des solutions aqueuses de peroxyde d'hydrogène renfermant plus de 60% en poids de peroxyde d'hydrogène. Les solutions traitées selon l'invention sont généralement des solutions aqueuses qui contiennent de 10 à 60% en poids de peroxyde d'hydrogène. Le procédé convient tout particulièrement pour la purification de solutions aqueuses à 30% en poids, notamment destinées à être utilisées dans l'industrie électronique.

Selon un autre aspect de l'invention, on utilise un système de sécurité permettant de noyer rapidement le lit de résine sous un déluge d'eau, comme mentionné ci-avant :

Le système de sécurité permet de manière automatique ou manuelle, de rincer très rapidement les résines avec de l'eau. Préférentiellement, les résines seront rincées lorsque le débit du liquide est arrêté ou lorsqu'il est inférieur à 50% du débit de consigne à cause d'un dysfonctionnement et que du peroxyde d'hydrogène est susceptible de rester en contact avec l'une des résines. Le dispositif de mise en sécurité de l'unité est constitué par des canalisations séparées et de diamètre supérieur à celui des canalisations utilisées pour la purification du peroxyde d'hydrogène. De manière avantageuse, le flux de l'eau de rinçage sera ascendant dans les colonnes.

Le déluge sera de préférence effectué avec de l'eau très pure disponible sur le réseau de manière à ne pas introduire d'impuretés et à redémarrer le système plus rapidement après avoir réparé l'anomalie. Cependant si de l'eau ultra pure n'est pas disponible, le système sera rincé avec de l'eau de ville du réseau de manière à assurer la mise en sécurité. Un dispositif constitué de vannes et de capteurs sert à assurer le basculement de l'eau ultra pure sur l'eau de ville du réseau.

Dans une variante du procédé, l'eau de ville peut être remplacée par un stockage d'eau, comme par exemple un conteneur pressurisé. De préférence, le volume de ce conteneur sera d'au moins 10 fois le volume total des colonnes.

L'unité comprend préférentiellement des pompes pneumatiques alimentées par de l'air comprimé. En cas de rupture de l'alimentation en air comprimé, les pompes sont alors alimentées en azote, éventuellement l'azote de qualité « électronique », jusqu'à ce que l'air comprimé soit à nouveau disponible et au maximum pendant un temps t préalablement fixé dans le système de gestion automatique de l'unité. Au-delà de ce temps t, l'unité sera rincée par le déluge d'eau, comme expliqué ci-avant.

La présente invention concerne également une unité et dispositif de purification d'une solution aqueuse de peroxyde d'hydrogène contenant des impuretés organiques et/ou métalliques.

Ce dispositif comprend, de préférence :
- au moins une colonne contenant une résine anionique,
- au moins une colonne contenant une résine cationique,
- un réservoir contenant le liquide, notamment peroxyde d'hydrogène à épurer au contact des résines,
- une pompe de préférence pneumatique qui permet d'envoyer le liquide et le peroxyde d'hydrogène vers le bas de la première colonne,
- de préférence, un réservoir tampon et une pompe placés après chaque colonne, le niveau de liquide dans chacun de ces réservoirs étant régulé.

La colonne contenant la résine anionique est préférentiellement placée avant la colonne contenant la résine cationique, les colonnes étant de préférence alimentées en flux ascendant.

Chacune des colonnes dudit dispositif comporte en général :
- des moyens qui permettent de maintenir les billes de résine tassées,
- des moyens placés en bas de la colonne, qui permettent une bonne répartition du liquide dans le lit de résine (par exemple, un système d'injection en forme d'entonnoir),
- une canalisation, en bas de colonne qui permet le passage de la solution de peroxyde d'hydrogène ou de l'eau de rinçage,
- une canalisation, en haut de colonne qui permet à la solution de peroxyde d'hydrogène ou à l'eau de rinçage, de se déverser par débordement dans un réservoir tampon.

L'invention sera mieux comprise à l'aide des exemples de réalisation suivants, donnés à titre non limitatif conjointement avec les figures et qui représentent :
La figure 1, un schéma descriptif d'ensemble de l'appareil selon l'invention,
La figure 2, un schéma de détail du système de sécurité du dispositif selon l'invention,
La figure 3, un schéma de principe d'une colonne d'épuration sur lit de résine comportant un système de maintien de pression de la résine selon l'invention,
La figure 4, un exemple de réalisation d'une colonne utilisée dans le dispositif décrit sur la figure 1.

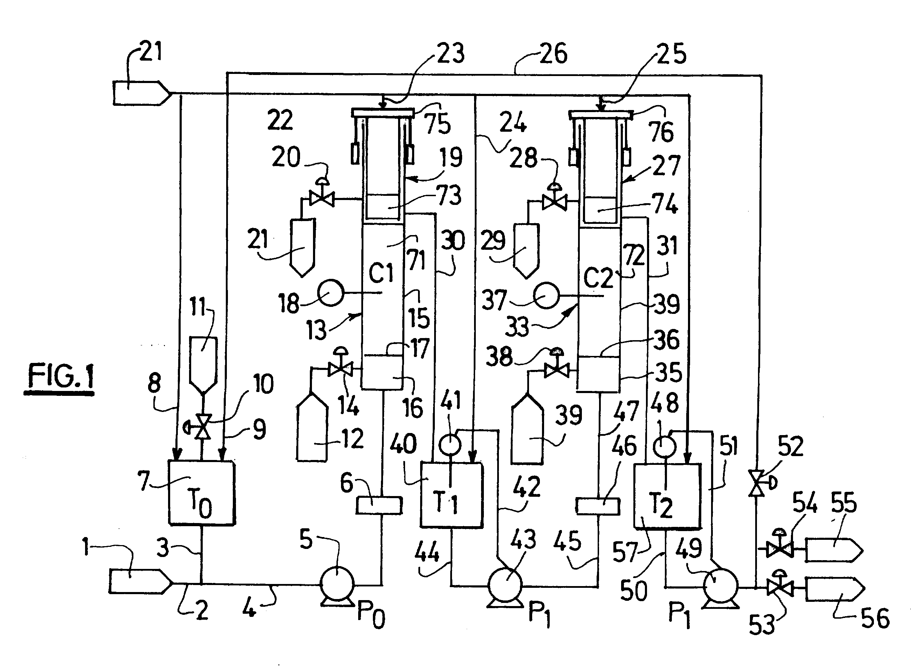

Sur la figure 1, une source 1 d'eau désionisée EDI est reliée par la canalisation 2 d'une part, à la canalisation 3 elle-même reliée au récipient de stockage 7 (T0) et d'autre part, à la canalisation 4 elle-même reliée à la pompe 5, puis à la base de la colonne 13 par l'intermédiaire du piège à bulle 6. Le récipient 7 (T0) est alimenté par une source de peroxyde d'hydrogène H202 11 par l'intermédiaire de la vanne 10 et comporte également une entrée d'injection d'azote de haute pureté provenant de la capacité d'azote de haute pureté 21 par l'intermédiaire de la ligne d'alimentation 8, et est également relié à la canalisation 9 de recyclage en sortie de pompe 49 par l'intermédiaire de la vanne 52 et de la canalisation 26. La colonne 13 comporte à sa base un système de déluge d'eau 12 relié à la partie inférieure 16 de la colonne 13 par une vanne 14. Une grille 17 supporte le lit de résine 71 à sa partie inférieure sur lequel vient s'appuyer un plateau mobile 73 de manière à maintenir une légère pression (au moins 100 Pascal - pression relative) sur la résine selon le procédé de l'invention, ce plateau mobile étant fixé à l'extrémité inférieure de la partie coulissante 19 de la colonne dont la partie supérieure est fermée par un couvercle 75 au travers duquel peut passer un conduit 23 d'injection d'azote ultra pur provenant de la capacité d'azote 21. A l'intérieur du corps 15 de la colonne 13, situé dans le lit de résine se trouve une sonde de température 18 permettant de contrôler la température et de déclencher le déluge 12 si cette température dépassait un seuil fixé à l'avance. Dans la partie supérieure de la colonne, au-dessus de la partie mobile 73, est situé un drain 21 relié à un trop plein de la partie supérieure 19 de la colonne 13 (trop plein non représenté sur la figure) par l'intermédiaire de la vanne 20, tandis que le liquide chimique tel que par exemple le peroxyde d'hydrogène, filtré et purifié sur le lit de résine 71 de la première colonne 13 s'écoule par la canalisation 30 dans le réservoir 40 (T1), le trop plein mentionné ci-dessus permettant d'évacuer l'excédent de liquide si celui-ci ne peut s'écouler en quantité suffisante dans la canalisation 30 et la capacité réservoir 40.

Dans ce réservoir 40 (T1), on recueille le peroxyde d'hydrogène purifié dans un premier stade (par exemple la résine 71 qui peut être une résine anionique seule). Cette capacité 40 comporte un détecteur de niveau 41 qui commande la mise en marche de la pompe 43 reliée par la canalisation 44 à la partie inférieure de la capacité 40, ladite pompe 43 délivrant via la canalisation 45 le liquide chimique déjà partiellement purifié au piège à bulles 46 lui-même relié par la canalisation 47 au bas de la colonne 33 qui peut être identique ou différente de la colonne 13. Cette colonne 33 comporte également dans sa partie inférieure un déluge 39 relié par la vanne 38 à la partie inférieure 35 de la colonne 33 avec une grille 36 supportant la résine 72 dans laquelle est située une sonde de température 37 tandis que la partie mobile 74 s'appuie sur cette résine 72 et l'ensemble mobile 27 est fermé dans sa partie supérieure par un couvercle 76 dans lequel est prévue une conduite 25 d'injection d'azote reliée à la capacité d'azote 21 et dans sa partie inférieure comporte d'une part, une canalisation 31 d'évacuation du liquide épuré sur cette deuxième colonne 33 et un système de trop-plein relié à un drain 29 par l'intermédiaire de la vanne 28. La canalisation 31 est reliée à une capacité 57 (T2) qui comporte un détecteur de niveau 48 lui-même relié à une pompe 49 et commandant celle-ci de manière à vider la capacité 57 par l'intermédiaire de la conduite 50. La sortie de cette pompe 49 est reliée d'une part, par l'intermédiaire de la vanne 54 à un stockage 55 en liquide chimique tel que le peroxyde d'hydrogène, à un système de drain 56 par l'intermédiaire de la vanne 53 de manière à pouvoir purger le système en cas de nécessité, et enfin par l'intermédiaire de la vanne 52 à la capacité 7 (T0).

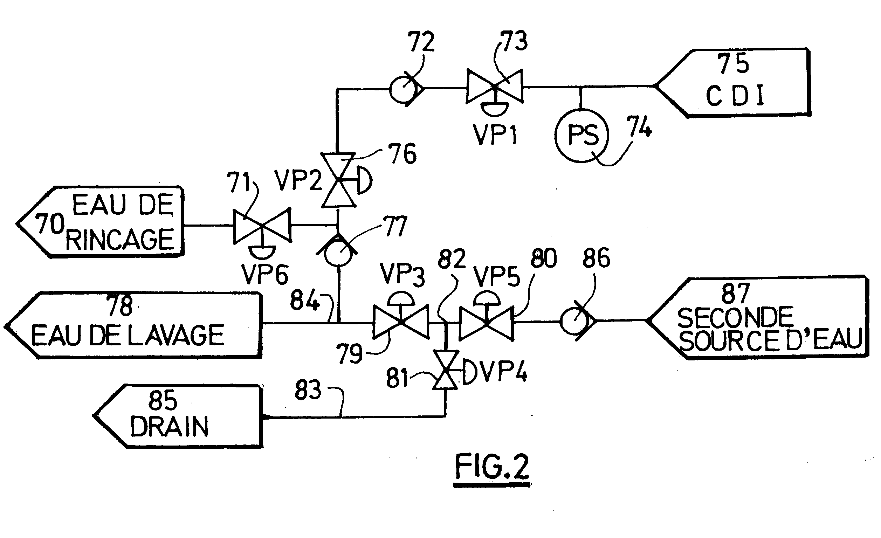

La figure 2 décrit succinctement un système de sécurité relié au déluge d'eau destiné à noyer la résine d'une colonne du système de la figure 1 au cas ou par exemple la température dépasserait une valeur de consigne. Le système de déluge d'eau 78, c'est à dire de l'eau débitée en grande quantité, est relié par la canalisation 84 d'une part à la vanne 79 VP3, d'autre part par le clapet anti-retour 77 à la vanne 76 VP2 dont l'autre extrémité est reliée par le clapet anti-retour 72 à la vanne 73 VP1, la sortie de celle-ci étant reliée à la réserve d'eau désionisée EDI 75, avec un système de mesure de pression 74 permettant de détecter la présence ou l'absence d'eau désionisée dans la réserve d'eau désionisée 75. La canalisation 84 qui alimente le système de déluge est reliée à une extrémité de la vanne 79 VP3 dont l'autre extrémité est reliée d'une part à la vanne VP4 81 qui commande par la canalisation 83 le système de drain 85 et d'autre part par la vanne 80 VP5 via le clapet anti-retour 86 à une seconde source d'eau 87 qui peut être par exemple l'eau courante, destinée à venir suppléer l'absence d'eau désionisée en cas de problème d'élévation de température. Le système d'eau de rinçage 70 est relié via la vanne 71 (VP6) au point commun de la vanne 76 (VP2) et du clapet anti retour 77.

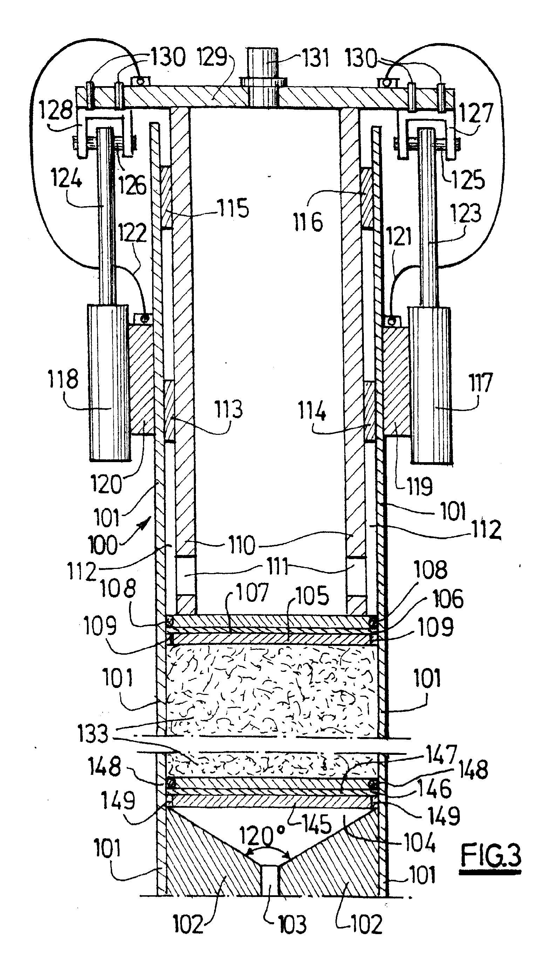

Sur la figure 3 est représentée une vue de principe des colonnes 13 et 33 de la figure 1.

L'ensemble de la colonne 100 comporte une enveloppe, de préférence mais pas nécessairement, cylindrique 101, avec une partie inférieure pleine, par exemple 102, au centre de laquelle est disposé axialement un conduit 103 venant déboucher dans une partie 104 en forme d'entonnoir, l'angle de cet entonnoir étant par exemple de l'ordre de 120°. Au dessus de cette partie en forme d'entonnoir, et sensiblement au point de raccordement de l'extrémité de l'entonnoir 104 et de l'enveloppe 101, est disposé un premier plateau perforé 145 comportant en périphérie un joint racleur 149 puis disposé au dessus de ce plateau 145 se trouve un filtre 146 avec des mailles de dimensions voulues de manière à retenir les billes de résine, puis posé sur ce filtre146 est disposé un nouveau plateau perforé 147 qui peut être identique ou différent du plateau 145, ayant à sa périphérie un joint torique 148 permettant d'assurer la totale étanchéité entre l'entonnoir 104 et l'intérieur de la colonne 100 contenant la résine d'épuration 133. Les plateaux 145, 147 et le filtre 146 sont en général solidaires de l'enveloppe 101, c'est à dire fixes. Le lit de résine 133 occupe la hauteur voulue dans la colonne 100. Au dessus de ce lit est placé un système mobile de plateaux 105, 107 et de filtre 106 (du même type ou différents de l'ensemble 145, 147, 146), ce système mobile étant solidaire de la partie coulissante 110 de la colonne et comportant un joint torique 108 et un joint racleur 109.

Le corps 110 comporte à sa partie inférieure une ouverture sous forme d'une pluralité de fentes ou d'orifices 111, permettant l'écoulement du liquide en 112. Afin d'assurer une pression sur la résine 133 se trouvant dans la colonne, il est prévu autour du corps de la partie mobile 110 un système de cales 113, 114, 115, 116, permettant à cette partie mobile de coulisser à l'intérieur de l'enveloppe 101 et de maintenir une pression constante sur la résine 133, les ouvertures 111 assurant par ailleurs une pression sensiblement égale à la pression atmosphérique sur le liquide qui circule dans la colonne. La partie supérieure du corps mobile 110 est fermée par un disque 129 qui comporte une ouverture centrale 131 pour l'injection éventuelle d'azote de préférence ultra pur (qualité dite «électronique »), et comporte en périphérie des vis 130 de rupture reliées au vérin 117 par l'intermédiaire d'une pièce en forme de U 127, 128, reliée au bras 123, 124 du vérin 117, 118 par les goupilles 125, 126. Un câble de retenue 121, 122 est prévu de manière à ce que s'il advient une rupture des vis 130 qui sont calibrées de telle manière qu'elles se rompent au-delà d'une certain force exercée sur elles, la partie supérieure 129 soit retenue au corps 101 du système auquel les vérins 117 et 118 sont fixés par l'intermédiaire des pièces de fixation respectives 119 et 120.

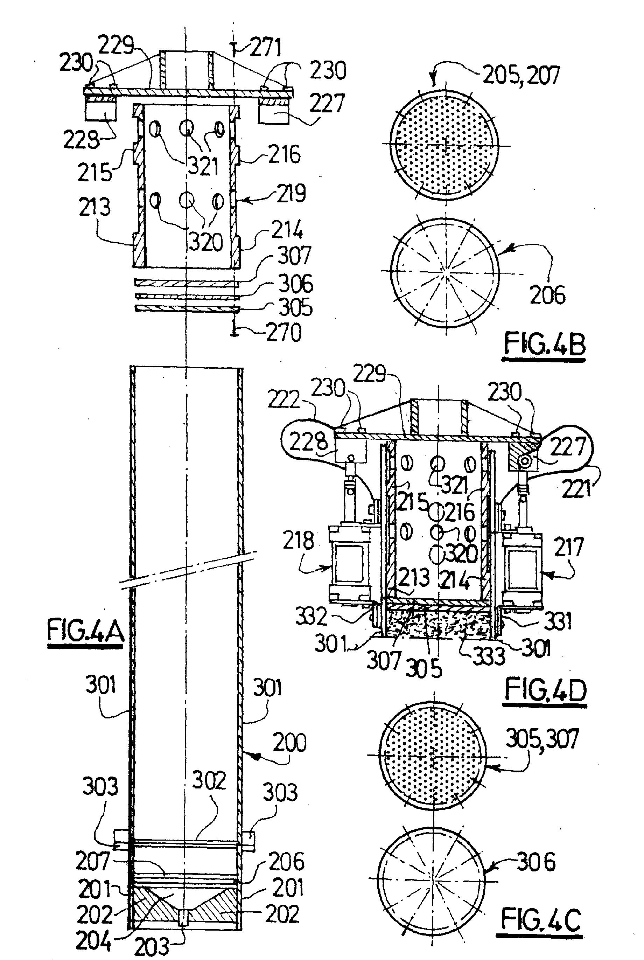

La figure 4 représente un exemple de réalisation détaillé de la colonne représentée schématiquement sur la figure 3. Sur cette figure, les mêmes éléments que ceux de la figure 3 ayant sensiblement la même fonction, comportent la même numérotation à l'exception du premier chiffre 1 sur la figure 3 remplacé par le chiffre 2 sur la figure 4 (le corps de la colonne 101 sur la figure 3 est devenu 201 sur la figure 4).

Le corps de la colonne 201 est fermé à sa partie inférieure par une partie pleine 202 en forme d'entonnoir à travers laquelle est prévu un orifice 203 disposé selon l'axe de cette colonne cylindrique 201. La partie en forme d'entonnoir 204 comporte un angle de l'ordre de 120° et s'appuie sur la grille 205 surmontée du filtre 206 lui-même surmonté de la grille 207 comme décrit à la figure précédente. Ce corps se prolonge dans sa partie supérieure par une partie cylindrique identique 201 reliée à la partie inférieure le long de la ligne 302 par un système de fixation 303, la séparation de la colonne 201 en deux parties permettant d'introduire facilement dans la partie inférieure pleine les grilles 205, 207 et le filtre 206. Ce corps 201 de la colonne 200 comporte une hauteur qui est de l'ordre du mètre avec un diamètre de l'ordre de 10cm, la résine étant disposée à l'intérieur de cette colonne 201 entre la grille 207 et la partie supérieure de la colonne.

Dans la partie supérieure de cette colonne est disposée une partie mobile 219 qui comporte à sa partie inférieure un système de grilles perforées 305, 307 entre lesquelles est disposé un filtre 306, du même type ou différent du système 205, 206, 207 décrit ci-avant. Essentiellement, les grilles perforées comportent une pluralité de trous répartis sur l'ensemble de la surface, tandis que le filtre 306 (comme le filtre 206) comporte des pores de diamètre inférieur à la taille des billes de résine. Cet ensemble de grilles et de filtre est fixé à la partie inférieure de la partie mobile 219 par un ensemble de vis 270, cette partie mobile comportant un ensemble de cales 213, 214, 215, 216, permettant à cette partie mobile 219 de coulisser dans l'enveloppe 201 de la colonne. La partie supérieure de cette partie mobile est fermée par une pièce cylindrique 229 à la périphérie de laquelle sont disposées des pièces en forme de U, 227, 228, reliées à cette partie supérieure 229 par un ensemble de vis 230 (vis de rupture). La partie circulaire supérieure 229 est fixée à la partie cylindrique 219 par un ensemble de vis 271. Sur chacune des pièces 227, 228 sont fixés des vérins 217, 218 permettant de maintenir une pression calibrée sur la partie mobile 219 de la colonne selon l'invention et permettant ainsi à l'ensemble des grilles 305, 307 de venir s'appuyer sur la résine 333 et de maintenir ainsi une pression calibrée et constante quelque soit l'évolution de la résine à l'intérieur du corps 201 de la colonne, notamment lorsque cette résine en cours d'utilisation gonfle et vient ainsi pousser vers le haut le plateau perforé 305. La partie mobile 219 comporte des systèmes de perforations 320, 321 permettant le passage et l'évacuation du liquide issu de la colonne, le liquide en fonctionnement normal après épuration s'écoulant par les perforations 320, tandis que les perforations 321 fonctionnent comme des trop-pleins notamment lorsque le déluge a été actionné dans la colonne. Les câbles 221 et 222 sont des câbles de retenue de la partie supérieure 229 en cas de rupture des vis 330 sous la pression de la résine sur le plateau 305. La partie inférieure des vérins 217, 218 est fixée au corps 201 de la colonne respectivement en 331 et 332.

Le fonctionnement du dispositif selon l'invention et en particulier le système de maintien de pression sur la résine dans la colonne va maintenant être expliqué ci-après :

Les billes de résines sont maintenues en haut de colonne par un filtre équipé de deux joints ; un de type racleur et un de type torique. Ce système permet une bonne étanchéité afin d'éviter l'entraînement de billes de résine en sortie de colonne.

Afin d'améliorer l'efficacité de l'épuration, il est important de travailler en lit tassé. Pour cela, la tête de colonne est composée d'un piston équipé du filtre précédemment décrit, et de deux vérins chargés d'appliquer une force de maintien constante sur le lit de résine. Ces vérins sont préférentiellement de type pneumatique, la force de maintien étant réglée par la pression d'alimentation d'air comprimé du vérin. Préférentiellement, pour des raisons de sécurité, les vérins sont reliés au piston par des vis de rupture, de manière à permettre le dégagement complet du piston en cas de décomposition du peroxyde d'hydrogène.

Un dispositif de répartition du liquide équipe le bas de chaque colonne de telle sorte que le liquide soit réparti de façon homogène sur la section de la colonne.

De préférence, ce dispositif est constitué d'une buse de pulvérisation à cône plein avec surface d'impact circulaire. L'angle de pulvérisation est adapté à la circonférence de la colonne et à la hauteur qui sépare la buse du support du filtre qui retient la résine.

L'unité de purification selon l'invention comprendra de préférence un système de sécurité permettant de rincer à l'eau les résines contenues dans les colonnes, de manière à en éliminer le peroxyde d'hydrogène en un temps très court.
Chaque colonne est de préférence munie d'une canalisation d'arrivée et de sortie d'eau indépendantes, différentes des canalisations qui servent au fonctionnement normal de l'unité.

L'arrivée et la sortie de l'eau se feront par l'intermédiaire de préférence de vannes pneumatiques normalement ouvertes en position de sécurité. L'unité se mettra en position de sécurité lorsqu'un risque d'immobiliser du peroxyde d'hydrogène sur une des résines, aura été détecté ou en cas d'augmentation de la température du liquide, notamment dans les colonnes ou à la sortie de celles-ci. La position de sécurité peut également être provoquée par la perte de l'alimentation électrique, la perte de l'alimentation en air comprimé, la perte du contrôle et/ou de la commande de l'appareil, ou par action de l'opérateur sur un bouton d'arrêt d'urgence pour une raison choisie par l'opérateur.

Le débit de l'eau de rinçage au travers des colonnes sera préférentiellement supérieur au débit de fonctionnement normal de l'unité. De préférence, le débit sera tel que chaque résine soit rincée avec au moins 3 fois son volume d'eau en moins de 5 min.

Ce système est décrit sur la Figure 2 :

En position d'urgence, lorsqu'un danger a été détecté, les vannes VP1, VP2, VP3, VP5 sont ouvertes, les vannes VP4 et VP6 sont fermées, le déluge est alors alimenté en eau ultra pure à condition que la pression de l'eau ultra pure soit supérieure à la pression de la deuxième source d'eau (eau du réseau).

Si la pression de l'eau ultra pure diminue, c'est-à-dire que l'eau ultra pure n'est plus disponible, le déluge sera alimenté par la deuxième source d'eau.

En fonctionnement normal, l'unité est alimentée en eau ultra pure, les vannes VP1, VP2, VP4 et VP6 sont ouvertes, VP3 et VP5 sont fermées. La vanne VP4 est ouverte afin d'éviter toute pollution de l'eau désionisée Dl par l'eau de la deuxième source en cas de défaillance de la vanne VP5.

De manière préférentielle, le dispositif comprend un filtre placé après la dernière colonne afin d'abaisser le niveau de particules dans le liquide. De manière préférentielle, le dispositif comprend une prise d'échantillons placée après la dernière colonne. La prise d'échantillon s'effectue dans un compartiment avec un balayage d'azote, de préférence de qualité électronique, par l'intermédiaire d'une vanne dont l'ouverture est de préférence commandée au pied, ce qui permet à l'opérateur d'avoir les deux mains disponibles. Ce dispositif facilite la prise d'échantillons.

### Exemple 1

L'installation décrite sur la figure 1, représente un exemple de réalisation de la présente invention.

L'unité est construite avec des matériaux adaptés à la production de produits chimiques ultra purs utilisés dans l'industrie électronique, tels que le polyéthylène haute densité, le polytetrafluoroéthylène, etc...

La colonne C1 contient une résine anionique telle que par exemple celle vendue sous la dénomination commerciale " DOWEX MONOSHERE 550A LC NG " par la société DOW. La forme ionique utilisée est la forme HCO₃⁻.

La colonne C2 contient une résine cationique telle que la résine vendue sous la dénomination commerciale " DOWEX MONOSHERE 500C NG " par la société DOW. La forme ionique utilisée est la forme H⁺.

Chaque colonne est équipée d'un dispositif décrit précédemment, qui permet de maintenir la résine en place.

Le peroxyde d'hydrogène est stocké dans le réservoir 7 (T0). L'ouverture de la vanne d'alimentation est commandée par les capteurs de niveaux placés sur T0.

Le peroxyde d'hydrogène est ensuite pompé par l'intermédiaire de la pompe 5 (P0) vers la colonne C1 et traverse celle-ci de bas en haut. Le liquide s'écoule par gravité dans le réservoir 40 (T1) puis il est pompé par l'intermédiaire de la pompe 43 (P1) vers la colonne C2 de bas en haut. Il s'écoule dans le réservoir 57 (T2). Le liquide est ensuite pompé de T2, par l'intermédiaire de la pompe 49 (P2), pour être envoyé vers les rejets, ou vers une cuve de stockage, vers le point d'utilisation ou dans le stockage T0.

Le dispositif décrit ci-avant a été utilisé comme suit :
3000 litres de peroxyde d'hydrogène 30% distillé sont épurés par passage sur les colonnes Cl et C2 à un débit de 2 I/min. La charge volumique dans chaque colonne est égale à 15h⁻¹.

Le tableau ci-dessous rassemble les valeurs des impuretés principales dans le peroxyde d'hydrogène avant et après épuration :

| Impureté | avant épuration | après épuration |
|---|---|---|
| Na | 170 ppb | < 0,1 ppb |
| Ca | 14 ppb | < 0,1 ppb |
| Fe | 4 ppb | < 0,1 ppb |
| Al | 40 ppb | < 0,1 ppb |
| NO3 | 5000 ppb | < 10 ppb |
| Cl | 170 ppb | < 10 ppb |

### Exemple 2 :

L'exemple ci-après est un exemple comparatif mettant en évidence la nécessité d'un débit suffisamment important, c'est à dire une vitesse linéaire dans le lit de résine de préférence supérieure à environ 10 m/h.

La colonne C1 comporte 8 litres de résine anionique DOW A550 HCO3.

La colonne C2 comporte 8 litres de résine cationique DOW C650.

Le mode ascendant de passage du liquide est utilisé pour les deux colonnes.

Les résultants obtenus (avant et après épuration) sont résumés dans le tableau 1 ci-après, pour deux débits différents :

**Tableau 1**

| | Concentration dans H₂O₂ **avant épuration** (ppt) | Concentration dans H₂O₂ **après épuration** (ppt) | |
|---|---|---|---|
| | | **Débit = 150 l/h** | Débit = 20 l/h |
| Na | 170 000 | 20 | 700 |
| Al | 40 000 | 20 | 150 |
| Fe | 3 700 | 35 | 60 |
| Ca | 13 500 | 5 | 200 |
| Sn | <6000 | 200 | 3 800 |

Le tableau 2 ci-après donne la correspondance entre le débit et la vitesse linéaire dans la colonne.

**Tableau 2**

| **Débit** | **Vitesse linéaire (m/h)** |
|---|---|
| 150 l/h | 19 |
| 20 l/h | 3 |
| | |

## Revendications

1. Procédé de purification sur le site d'une solution aqueuse de peroxyde d'hydrogène dans lequel on fait traverser à la solution un lit de résine susceptible, au moins partiellement, d'adsorber ou d'absorber les impuretés présentes dans la solution, procédé caractérisé en ce que la solution de peroxyde d'hydrogène est injectée dans le lit de résine et traverse celui-ci à une vitesse sensiblement linéaire comprise de préférence entre 10 m/h et 50 m/h et de préférence entre 10 m/h et 20 m/h et en ce que le lit de résine est maintenu sensiblement tassé pendant au moins 50% de la durée de la purification de la solution par passage au contact de ladite résine.

2. Procédé selon la revendication 1 caractérisé en ce que le lit de résine est maintenu sensiblement tassé par application d'une pression sur les billes de résine constituant le lit lorsque la solution est injectée dans ledit lit de bas en haut pour le traverser au moins partiellement.

3. Procédé selon l'une des revendications 1 ou 2, dans lequel la résine est stockée dans une colonne et forme un lit de hauteur h au dessus duquel est disposée une surface sensiblement plane, à une distance d de la résine, le rapport d/h étant maintenu en toutes circonstances inférieur à environ 0,1.

4. Procédé selon la revendication 3, caractérisé en ce que d/h<0,05.

5. Procédé selon la revendication 3, caractérisé en ce que d/h < 0,01.

6. Procédé selon l'une des revendications 2 à 5, caractérisé en ce que la pression appliquée sur la résine est d'au moins 100 pascal (pression relative), de préférence d'au moins 200 pascal.

7. Procédé selon l'une des revendications 1 à 6, caractérisé en ce que la pression de liquide et/ou de gaz dans la colonne est égale à ou voisine de la pression atmosphérique.

8. Procédé selon l'une des revendications 1 à 7, caractérisé en ce que la vitesse sensiblement linéaire du liquide est sensiblement verticale, dirigée vers le haut.

9. Procédé selon l'une des revendications 1 à 8, caractérisé en ce que le lit de résine comporte au moins une résine constituée essentiellement de sphères de diamètre inférieur à environ 700 microns.

10. Procédé selon la revendication 9, caractérisé en ce que le lit de résine est constitué de monosphères de diamètre sensiblement identique à 10% près.

11. Procédé selon l'une des revendications 1 à 10, caractérisé en ce que l'une au moins des résines constituant le lit de résine comporte moins de 50mg de fer, 10mg de Cu et/ou 50mg d'aluminium par litre de résine sèche.

12. Procédé selon l'une des revendications 1 à 11, caractérisé en ce que la résine étant disposée sous forme d'un lit dans une colonne, la solution est injectée à la base de ladite colonne à l'aide d'une buse d'injection qui injecte le liquide dans un angle solide qui se raccorde sensiblement aux parois de la colonne de manière à injecter la solution sensiblement sur toute la section du lit de résine.

13. Procédé selon l'une des revendications 1 à 12, caractérisé en ce que la solution est injectée dans le lit de résine à la partie inférieure de celui-ci à l'aide d'un système de pompage.

14. Procédé selon l'une des revendications 1 à 13, caractérisé en ce que l'on prévoit plusieurs lits successifs de résines anioniques et/ou cationiques.

15. Procédé selon la revendication 13, comportant plusieurs colonnes successives d'épuration de la solution, comportant chacune au moins un lit de résine anionique et/ou cationique, lesdits lits étant disposés sensiblement à la même hauteur.

16. Procédé selon l'une des revendications 13 à 15, caractérisé en ce que l'on prévoit des pièges à bulles entre les pompes et l'injection dans la colonne.

17. Procédé selon l'une des revendications 1 à 16, caractérisé en ce que l'on mesure la température du liquide dans le lit de manière à détecter une augmentation anormale de température qui déclenche l'ouverture d'un circuit d'eau qui vient noyer le lit de résine.

18. Procédé selon la revendication 17, caractérisé en ce que l'eau est injecté à la base du lit de résine et remonte dans celui-ci.

19. procédé selon l'une des revendications 1 à 18, caractérisé en ce que l'on injecte de l'azote au dessus du lit de résine.

20. Procédé selon la revendication 19,caractérisé en ce que l'azote injecté a une pureté dite « électronique » adaptée à la pureté gazeuse requise dans la fabrication des semi-conducteurs.

21. Dispositif de purification sur le site d'une solution chimique, caractérisé en ce qu'il comporte :
- au moins une colonne (13, 33) contenant une résine anionique,
- au moins une colonne (33, 13) contenant une résine cationique,
- un réservoir (7) contenant le liquide, notamment peroxyde d'hydrogène à épurer au contact des résines,
- une pompe (5) de préférence pneumatique qui permet d'envoyer le liquide notamment le peroxyde d'hydrogène vers le bas de la première colonne,
- de préférence, un réservoir tampon (40, 57) et une pompe (43, 49) placés après chaque colonne, le niveau de liquide dans chacun de ces réservoirs étant régulé.
